# EUROPÄISCHE PATENTSCHRIFT

(11) **EP 2 286 132 B1**
(45) Veröffentlichungstag und Bekanntmachung des Hinweises auf die Patenterteilung: **28.01.2015**
(21) Anmeldenummer: 09733947.7
(22) Anmeldetag: 14.04.2009
(51) Int. Cl.: F16L 27/06, F16L 47/18

(54) **ROHRMUFFE UND KUGELGELENK-KUPPLUNG ZUR VERBINDUNG VON ROHREN**
PIPE SLEEVE AND BALL JOINT COUPLING FOR CONNECTING PIPES
MANCHON DE TUYAU ET JOINT À ROTULE POUR LE RACCORDEMENT DE TUYAUX

(30) Priorität: 25.04.2008 DE 202008005803 U
(43) Veröffentlichungstag der Anmeldung: 23.02.2011
(73) Patentinhaber: Rehau AG + Co, 95111 Rehau (DE)
(72) Erfinder: SIEBER, Jürgen, 91074 Herzogenaurach (DE); LEIHBECHER, Heiko, 90530 Wendelstein (DE); HENDEL, Roland, 91086 Aurachtal (DE)
(86) Internationale Anmeldenummer: PCT/EP2009/002716
(87) Internationale Veröffentlichungsnummer: WO 2009/129948

(56) Entgegenhaltungen:
- EP-A1- 0 762 034
- EP-A2- 1 092 908
- WO-A1-02/50469
- WO-A1-2005/003615
- DE-U1-202004 016 989
- US-A- 3 592 491

## Beschreibung

Die Erfindung betrifft eine Rohrmuffe für eine Kugelgelenk-Kupplung, umfassend: eine abschnittsweise kugelförmige Außenkontur und eine Rohraufnahme, die endseitig durch einen Rohranschlag begrenzt ist; wobei die Rohrmuffe mit einer weiblichen Rohrkupplungseinrichtung mit einer abschnittsweise kugelförmigen Innenkontur koppelbar ist, um ein in der Rohraufnahme aufnehmbares Rohr gelenkig an die weibliche Rohrkupplungseinrichtung zu koppeln.

Eine derartige Rohrmuffe ist aus der DE 20 2004 016 989 U1 bekannt.

Wenn ein Rohr in die herkömmliche Rohrmuffe eingeschoben wird, kann die Rohrmuffe aufgrund einer Keilwirkung des Rohres gespreizt werden, so dass die Rohrmuffe in der weiblichen Rohrkupplungseinrichtung klemmt und festsitzt. Bei der herkömmlichen Rohrmuffe kann die Verkeilung des Rohrs in der Rohrmuffe nicht oder nur mit großem Aufwand gelöst werden.

Der Erfindung liegt die Aufgabe zugrunde, eine Rohrmuffe bereitzustellen, um ein in der Rohrmuffe verkeiltes Rohr leichter lösen zu können.

Um die der Erfindung zugrunde liegende Aufgabe zu lösen, wird die Rohrmuffe für eine Kugelgelenk-Kupplung nach Anspruch 1 bereitgestellt, welche umfasst: eine abschnittsweise kugelförmige Außenkontur und eine Rohraufnahme, die endseitig durch einen Rohranschlag begrenzt ist; wobei die Rohrmuffe mit einer weiblichen Rohrkupplungseinrichtung mit einer abschnittsweise kugelförmigen Innenkontur koppelbar ist, um ein in der Rohraufnahme aufnehmbares Rohr gelenkig an die weibliche Rohrkupplungseinrichtung zu koppeln, wobei der Rohranschlag von zumindest zwei Anschlagsabschnitten gebildet wird, die von einer Innenwand der Rohrmuffe hervorstehen.

Erfindungsgemäß schließt die Innenwand der Rohrmuffe, von welcher die Anschlagsabschnitte hervorstehen, einen Winkel von 10 bis 20°, vorzugsweise 15° gegenüber einer Leitungsachse ein. Durch diese Ausgestaltung kann ein optimaler Strömungsübergang vom Rohr in die weibliche Rohrkupplungseinrichtung bewerkstelligt werden.

Außerdem ist eine Stirnseite des Rohrs zwischen den Anschlagsabschnitten zugänglich und das verkeilte Rohr kann leicht gelöst werden.

Es kann sich als hilfreich erweisen, wenn der Rohranschlag von einer Vielzahl von Anschlagsabschnitten gebildet wird, deren Mittelachsen im Wesentlichen denselben Winkelabstand aufweisen. Dadurch kann ein Druck zum Lösen des verkeilten Rohres gleichmäßig auf die Stirnseite des Rohres aufgebracht werden und ein verkeiltes Rohr lässt sich noch leichter lösen.

Es kann sich als nützlich erweisen, wenn die Anschlagsabschnitte einen engsten Leitungsquerschnitt der Rohrmuffe definieren. Dadurch kann ein durchströmbarer Querschnitt der Kugelgelenk-Kupplung unter Verwendung der erfindungsgemäßen Rohrmuffe besonders groß ausgelegt werden.

Es kann sich als praktisch erweisen, wenn eine Bogenlänge der Anschlagsabschnitte in etwa 20 bis 50 %, vorzugsweise ca. 33 % des Winkelabstands der Mittelachsen zweier benachbarter Anschlagsabschnitte beträgt, mit Bezug auf eine Leitungsachse der Rohrmuffe. Durch diese Ausgestaltung bleibt zwischen den Anschlagsabschnitten ausreichend Platz, um z.B. mit einem Meißelwerkzeug oder dergleichen auf die Stirnseite des Rohres zuzugreifen, um das verkeilte Rohr zu lösen. Zusätzlich bieten die Anschlagsabschnitte eine große Stützfläche zum Abstützen des Rohres.

Es kann hilfreich sein, wenn ein Anschlagsabschnitt eine im Wesentlichen keilförmige Querschnittsform aufweist, wobei eine radial nach innen gerichtete Seite des Anschlagsabschnitts einen Winkel von 0 bis 10°, vorzugsweise 5° gegenüber einer Leitungsachse einschließt. Durch diese Ausgestaltung kann ein Strömungsübergang vom Rohr in die weibliche Rohrkupplungseinrichtung verbessert werden.

Es kann nützlich sein, wenn die Rohrmuffe an einer Außenseite zumindest drei Dichtungsaufnahmekammern aufweist. Diese Dichtungsaufnahmekammern bieten Dichtungen zwischen den männlichen und weiblichen Rohrkupplungseinrichtungen einen sicheren Halt. Mehrere hintereinander liegende Dichtungen verringern zusätzlich die Wahrscheinlichkeit, dass ein Fluid zwischen den männlichen und weiblichen Rohrkupplungseinrichtungen, die fluiddicht und gelenkig gekoppelt sind, austritt.

Es kann praktisch sein, wenn die Rohrmuffe an einer Innenseite zumindest eine Dichtungsaufnahmekammer aufweist. Diese Dichtungsaufnahmekammer bietet einer Dichtung zwischen dem Rohr und der Rohrmuffe einen sicheren Halt. Dadurch kann die Wahrscheinlichkeit verringert werden, dass ein Fluid zwischen dem Rohr und der Rohrmuffe austritt.

Es kann aber auch von Vorteil sein, wenn die Rohrmuffe an einer Außenseite zumindest fünf, vorzugsweise sechs, Kugelflächenabschnitte aufweist, die innerhalb einer gemeinsamen Kugelfläche enden, wobei die Kugelflächenabschnitte in einer Leitungsachsrichtung der Rohrmuffe voneinander beabstandet sind. Dadurch kann die Rohrmuffe in der weiblichen Rohrkupplungseinrichtung sicher und stabil geführt werden ohne zu verkeilen.

Es kann aber auch von großem Nutzen sein, wenn zumindest vier Kugelflächenabschnitte an umlaufenden Rippen ausgebildet sind, die von einem Gehäuse der Rohrmuffe im Wesentlichen radial nach außen hervorstehen. Die Rippen sorgen für eine steife und formstabile Struktur der Rohrmuffe und verringern zugleich das Gewicht der Rohrmuffe gegenüber einer Rohrmuffe aus Vollmaterial.

Es kann sich als vorteilhaft herausstellen, wenn eine Dichtungsaufnahmekammer zwischen zwei Kugelflächenabschnitten ausgebildet ist. Die Zwischenräume zwischen benachbarten Rippen können ideal zur Aufnahme von Dichtungseinrichtungen genutzt werden.

Es kann sich als praktisch erweisen, wenn ein Innenumfang der Rohraufnahme in etwa 70 bis 90 %, vorzugsweise in etwa 80% eines Außenumfangs der kugelförmigen Außenkontur der Rohrmuffe (Kugelumfang) beträgt. Dieses Größenverhältnis hat sich in Versuchen als besonders vorteilhaft herausgestellt, um die Kugelgelenk-Kupplung bei ausreichendem Fluiddurchsatz und ausreichender gelenkiger Verstellbarkeit leicht und kompakt zu gestalten.

Ein weiterer bevorzugter Aspekt der vorliegenden Erfindung betrifft eine Kugelgelenk-Kupplung zum Verbinden von Rohren, umfassend: eine weibliche Rohrkupplungseinrichtung mit einer abschnittsweise kugelförmigen Innenkontur und eine männliche Rohrkupplungseinrichtung mit einer abschnittsweise kugelförmigen Außenkontur, wobei die männlichen und weiblichen Rohrkupplungseinrichtungen in Fluidkommunikation stehend gelenkig gekoppelt sind, wobei die männliche Rohrkupplungseinrichtung eine Rohrmuffe nach einer der vorangegangenen Ausführungen aufweist. Diese Kugelgelenk-Kupplung löst die der Erfindung zugrunde liegende Aufgabe.

Es kann von Vorteil sein, wenn in zumindest einer Dichtungsaufnahmekammer ein quellfähiges Dichtelement angeordnet ist, dass unter dem Einfluss von Feuchtigkeit aufquillt und gegenüber der weiblichen Rohrkupplungseinrichtung abdichtet. Das quellfähige Dichtelement bildet eine Zweitsicherung für den Fall, dass eine konventionelle Dichtung, z.B. aus Gummi, versagt.

Es kann sich als vorteilhaft erweisen, wenn das quellfähige Dichtelement eine Rundschnur umfasst. Die Rundschnur ist kostengünstig verfügbar und für die Zwecke der Erfindung bestens geeignet.

Es kann sich als hilfreich erweisen, wenn ein quellfähiges Dichtelement in einer einem Mündungsende nächstliegenden Dichtungsaufnahmekammer auf der Außenseite der Rohrmuffe angeordnet ist. Dadurch kann ein günstiges Verhältnis zwischen einem Volumen des Raumes (umlaufende Nut) und einer Größe der Dichtfläche erzielt werden, so dass bereits eine recht klein bemessene Dichtschnur beim Quellen in einer relativ großen Fläche dichtend wirkt.

Es kann sich als nützlich erweisen, wenn die weibliche Rohrkupplungseinrichtung einen Kugelaufnahmeabschnitt mit der kugelförmigen Innenkontur und einen sich von dem Kugelaufnahmeabschnitt erstreckenden Verbindungsabschnitt aufweist, wobei eine Außenseite des Verbindungsabschnitts zu einem freien Ende hin zugespitzt ist und ein Spitzende bildet. Die weibliche Rohrkupplungseinrichtung ist damit wie ein freies Rohrende mit einer weiteren Kugelgelenk-Kupplung koppelbar, so dass beliebig viele Kugelgelenk-Kupplungen hintereinanderschaltbar sind und im Ergebnis eine größere gelenkige Verstellbarkeit erzielt werden kann.

Es kann sich als praktisch erweisen, wenn die weibliche Rohrkupplungseinrichtung einen Kugelaufnahmeabschnitt mit der kugelförmigen Innenkontur und einen sich von dem Kugelaufnahmeabschnitt erstreckenden Verbindungsabschnitt aufweist, wobei der Verbindungsabschnitt eine Rasteinrichtung aufweist. Dadurch kann die weibliche Rohrkupplungseinrichtung mit einem passenden Verbindungspartner unkompliziert und sicher verbunden werden.

Es kann sich als günstig erweisen, wenn die weibliche Rohrkupplungseinrichtung einen Kugelaufnahmeabschnitt mit der kugelförmigen Innenkontur und einen sich von dem Kugelaufnahmeabschnitt erstreckenden Verbindungsabschnitt aufweist, wobei der Verbindungsabschnitt ein Außengewinde aufweist.

Es kann sich auch als vorteilhaft erweisen, wenn der Kugelaufnahmeabschnitt eine Mündung aufweist, durch welche die männliche Rohrkupplungseinrichtung in die weibliche Rohrkupplungseinrichtung eindringt, wobei Vorsprungsabschnitte die Mündung umrandend im Wesentlichen axial von dem Kugelaufnahmeabschnitt hervorstehen.

Es kann aber auch von Vorteil sein, wenn die Kugelgelenk-Kupplung mit einer benachbarten Kugelgelenk-Kupplungen koppelbar ist, so dass beliebig viele Kugelgelenk-Kupplungen hintereinandergeschaltet werden können, um im Ergebnis eine größere gelenkige Verstellbarkeit zu erzielen und Rohre in winkeliger Anordnung auch in größeren Winkeln spannungsfrei zu verlegen.

Die bevorzugten Merkmale und Ausführungsbeispiele der vorliegenden Erfindung werden nachstehend mit Bezug auf die beiliegenden Zeichnungen im Detail erläutert.

### Kurze Beschreibung der Zeichnungen

- Figuren 1a bis d: zeigen verschiedene Ansichten einer weiblichen Rohrkupplungseinrichtung der erfindungsgemäßen Kugelgelenk-Kupplung gemäß einem ersten Ausführungsbeispiel.
- Figuren 2a bis e: zeigen verschiedene Ansichten einer weiblichen Rohrkupplungseinrichtung der erfindungsgemäßen Kugelgelenk-Kupplung gemäß einem zweiten Ausführungsbeispiel.
- Figuren 3a bis f: zeigen verschiedene Ansichten einer weiblichen Rohrkupplungseinrichtung der erfindungsgemäßen Kugelgelenk-Kupplung gemäß einem dritten Ausführungsbeispiel.
- Figuren 4a bis g: zeigen verschiedene Ansichten einer erfindungsgemäßen Rohrmuffe für die erfindungsgemäße Kugelgelenk-Kupplung.
- Figuren 5a und b: zeigen die erfindungsgemäße Kugelgelenk-Kupplung gemäß dem ersten Ausführungsbeispiel in einer gestreckten bzw. in einer gewinkelten Stellung.
- Figuren 6a und b: zeigen die erfindungsgemäße Kugelgelenk-Kupplung gemäß dem zweiten Ausführungsbeispiel in einer gestreckten bzw. in einer gewinkelten Stellung.
- Figuren 7a und b: zeigen die erfindungsgemäße Kugelgelenk-Kupplung gemäß dem dritten Ausführungsbeispiel in einer gestreckten bzw. in einer gewinkelten Stellung.

### Detaillierte Beschreibung der bevorzugten Ausführungsbeispiele

Die Erfindung betrifft eine Rohrmuffe 30 für eine Kugelgelenk-Kupplung 10 und eine Kugelgelenk-Kupplung 10 mit der Rohrmuffe 30.

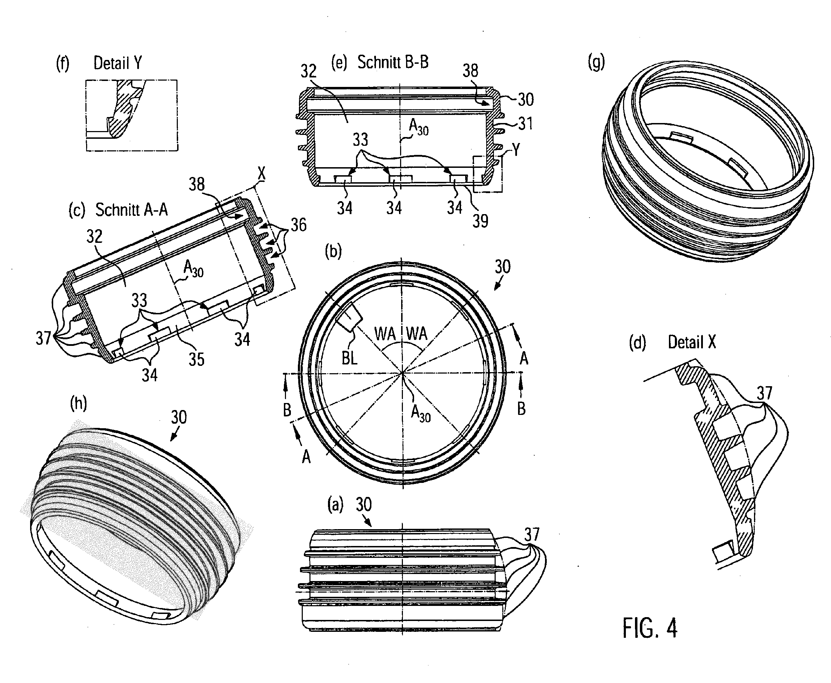

Zunächst werden die Merkmale der Rohrmuffe 30 mit Bezug auf Figuren 4a bis g beschrieben. Die Figuren 4a bis g zeigen verschiedene Ansichten der Rohrmuffe 30 für die erfindungsgemäße Kugelgelenk-Kupplung 10.

Die erfindungsgemäße Rohrmuffe 30 umfasst: eine abschnittsweise kugelförmige Außenkontur und eine Rohraufnahme 32, die endseitig durch einen Rohranschlag 33 begrenzt ist. Die Rohrmuffe 30 ist mit einer weiblichen Rohrkupplungseinrichtung 20 mit einer abschnittsweise kugelförmigen Innenkontur koppelbar, um ein in der Rohraufnahme 32 aufnehmbares Rohr gelenkig an die weibliche Rohrkupplungseinrichtung 20 zu koppeln. Der Rohranschlag 33 wird von zumindest zwei Anschlagsabschnitten 34 gebildet, die von einer Innenwand 35 der Rohrmuffe 30 radial hervorstehen. Der Rohranschlag 33 wird vorzugsweise aber von einer Vielzahl von Anschlagsabschnitten 34 gebildet, deren Mittelachsen im Wesentlichen denselben Winkelabstand WA aufweisen, wie anschaulich in Figur 4b dargestellt ist. Die Anschlagsabschnitte 34 definieren einen engsten Leitungsquerschnitt der Rohrmuffe 30. Mit Bezug auf eine Längsachse A30 der Rohrmuffe 30 beträgt eine Bogenlänge BL der Anschlagsabschnitte 34 in etwa 20 bis 50 %, vorzugsweise ca. 33 % des Winkelabstands WA der Mittelachsen zweier benachbarter Anschlagsabschnitte 34. Jeder Anschlagsabschnitt 34 weist eine im Wesentlichen keilförmige Querschnittsform auf, wobei eine radial nach innen gerichtete Seite des Anschlagsabschnitts 34 einen zu einem Mündungsende der Rohrmuffe 30 geöffneten Winkel von 0 bis 10°, vorzugsweise 5° gegenüber einer Leitungsachse A30 einschließt. Ein Radius der Rohraufnahme 32 beträgt in etwa 70 bis 90 %, vorzugsweise in etwa 80% eines Radius der kugelförmigen Außenkontur der Rohrmuffe 30.

Die Rohrmuffe 30 umfasst ein im Wesentlichen zylindrisches Gehäuse 31, in welchem die im Wesentlichen zylindrische Rohraufnahme 32 ausgebildet ist. Das Gehäuse 31 und die Rohraufnahme 32 können jede beliebige Form, z.B. auch eine polygonale Form, aufweisen. An der Innenseite des Gehäuses 31 ist im Bereich der Rohraufnahme 32 eine umlaufende, nutförmige Dichtungsanordnungskammer 38 ausgebildet, welche vorgesehen ist, um eine Dichtungseinrichtung zur Abdichtung eines in der Rohraufnahme 32 aufgenommenen Rohrs gegenüber der Rohrmuffe 30 aufzunehmen. Ein Innenumfang der Rohrmuffe 30 ist entlang der Leitungsachse A30 im Bereich der Rohraufnahme 32 im Wesentlichen konstant und lediglich im Bereich der Dichtungsanordnungskammer 38 entsprechend vergrößert. Die Rohraufnahme 32 erstreckt sich von einem Rohreinführende bis zum Rohranschlag 33, der kurz vor einem Mündungsende der Rohrmuffe 30 liegt. Ausgehend vom Rohreinführende zum Mündungsende bleibt der Innenumfang der Rohraufnahme 32 auf ca. 75 bis 90 % der Länge der Rohraufnahme 32 im Wesentlichen konstant und verringert sich nur auf den verbleibenden 25 bis 10 % kurz vor dem Rohranschlag 33.

Anders ausgedrückt, geht eine zur Leitungsachse A30 im Wesentlichen parallele Innenwand in eine gegenüber einer Leitungsachse A30 geneigte Innenwand 35 über. Die Innenwand 35 der Rohrmuffe 30, von welcher die Anschlagsabschnitte 34 hervorstehen, schließt einen Winkel von 10 bis 20°, vorzugsweise 15° gegenüber der Leitungsachse A30 ein.

An der Außenseite der Rohrmuffe 30 sind mehrere Kugelflächenabschnitte 37 ausgebildet, die alle in einer gemeinsamen Kugelfläche K enden und in einer Richtung der Leitungsachse A30 der Rohrmuffe 30 voneinander beabstandet sind. Zwei Kugelflächenabschnitte 37, einer am Rohreinführende und einer am Mündungsende der Rohrmuffe 30, werden von dem zylindrischen Abschnitt des Gehäuses 31 selbst gebildet. Vier weitere Kugelflächenabschnitte 37 werden von umlaufenden Rippen gebildet, die an der Außenseite des Gehäuses 31 einstückig angeformt sind und im Wesentlichen radial zur Leitungsachse A30 hervorstehen. Zwischen den an den Rippen ausgebildeten Kugelflächenabschnitte 37 sind insgesamt drei umlaufende Dichtungsanordnungskammern 36 an der Außenseite des Gehäuses 31 ausgebildet. Zwischen dem Kugelflächenabschnitt 37 am Mündungsende der Rohrmuffe 30 und dem benachbarten Kugelflächenabschnitt 37 an der ersten umlaufenen Rippe ist eine weitere Dichtungsanordnungskammer 36 an der Außenseite des Gehäuses 31 ausgebildet. Diese Dichtungsanordnungskammer 36 ist dazu vorgesehen, ein quellfähiges Dichtungsmaterial aufzunehmen.

Die bevorzugten Dimensionen der Rohrmuffe 30 für einen Rohrdurchmesser von 160 mm sind:
- Durchmesser der kugelförmigen Außenkontur K: ca. 195,3 mm
- Durchmesser der Rohraufnahme: ca. 160,8 mm
- Axiale Länge der Rohrmuffe: ca. 90 mm
- Wandstärke des Gehäuses 31 und der Rippen: ca. 5 bis 8 mm

Die Maßangaben verstehen sich inklusive Allgemeintoleranzen nach DIN ISO 2768 m. Größenverhältnisse der erfindungsgemäßen Kugelgelenk-Kupplung 10 und einzelner Komponenten davon sind aus den detailgetreuen Figurendarstellungen unmittelbar ableitbar.

Die Merkmale der erfindungsgemäßen Kugelgelenk-Kupplung 10 werden nachstehend mit Bezug auf die Figuren erläutert.

Die erfindungsgemäße Kugelgelenk-Kupplung 10 zum Verbinden von Rohren umfasst: eine weibliche Rohrkupplungseinrichtung 20 mit einer abschnittsweise kugelförmigen Innenkontur und eine männliche Rohrkupplungseinrichtung 30 mit einer abschnittsweise kugelförmigen Außenkontur, wobei die männlichen und weiblichen Rohrkupplungseinrichtungen 20, 30 in Fluidkommunikation stehend gelenkig gekoppelt sind.

Die Bezeichnungen "abschnittsweise kugelförmige Innenkontur" und "abschnittsweise kugelförmige Außenkontur" besagen, dass die Rohrmuffe 30 bzw. die männliche Rohrkupplungseinrichtung und die weibliche Rohrkupplungseinrichtung 20 jeweils zumindest abschnittsweise kugelförmige und/oder in einer kugelförmigen Fläche endende Oberflächenabschnitte aufweisen, so dass die Rohrmuffe 30 bzw. die männliche Rohrkupplungseinrichtung und die weibliche Rohrkupplungseinrichtung 20 in einer abschnittsweise kugelförmigen Kontaktfläche abdichtend zusammenwirken können und gelenkig koppelbar sind, insbesondere schwenkbar und/oder drehbar verbindbar sind.

Die männliche Rohrkupplungseinrichtung der erfindungsgemäßen Kugelgelenk-Kupplung 10 umfasst die erfindungsgemäße Rohrmuffe 30 gemäß der vorangegangenen Beschreibung.

Die männliche Rohrkupplungseinrichtung 30 und die weibliche Rohrkupplungseinrichtung 20 umfassen jeweils einen sich einlang einer Leitungsachse A20, A30 erstreckenden Leitungsabschnitt, wobei die Leitungsabschnitte in jeder Neigungs-Stellung der Rohrkupplungseinrichtungen 20, 30 fluiddicht, insbesondere flüssigkeitsdicht, in Kommunikation stehen, so dass ein Fluid über die erfindungsgemäße Kugelgelenk-Kupplung 10 geleitet werden kann. Eine Stellung, in welcher die Leitungsachsen A20, A30 der weiblichen und männlichen Rohrkupplungseinrichtungen 20, 30 im Wesentlichen zusammenfallen oder zumindest parallel zueinander ausgerichtet sind, wird als "gestreckte Stellung" bezeichnet.

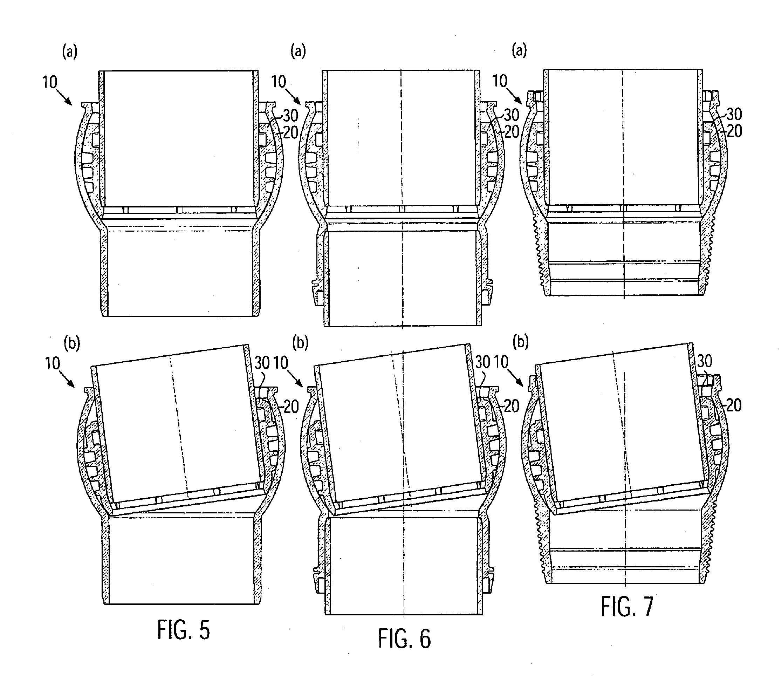

Eine Stellung, in welcher die Leitungsachsen A20, A30 der weiblichen und männlichen Rohrkupplungseinrichtungen 20, 30 oder zumindest deren Ebenen einen Winkel einschließen, wird als "gewinkelte Stellung" bezeichnet. Die Figuren 5a, 6a und 7a zeigen die unterschiedlichen Ausführungsbeispiele der erfindungsgemäßen Kugelgelenk-Kupplung 10 jeweils in der gestreckten Stellung. Die Figuren 5b, 6b und 7b zeigen die unterschiedlichen Ausführungsbeispiele der erfindungsgemäßen Kugelgelenk-Kupplung 10 jeweils in der gewinkelten Stellung.

In zumindest einer Dichtungsaufnahmekammer 36 der Rohrmuffe 30 ist ein quellfähiges Dichtelement angeordnet, dass unter dem Einfluss von Feuchtigkeit aufquillt und gegenüber der weiblichen Rohrkupplungseinrichtung 20 abdichtet. Als das quellfähige Dichtelement wird bevorzugt eine Rundschnur eingesetzt. Das quellfähige Dichtelement ist vorzugsweise in der dem Mündungsende nächstliegenden Dichtungsaufnahmekammer 36 an der Außenseite der Rohrmuffe 30 angeordnet.

Die weibliche Rohrkupplungseinrichtung 20 umfasst einen Kugelaufnahmeabschnitt 21 mit der kugelförmigen Innenkontur und einen sich von dem Kugelaufnahmeabschnitt 21 erstreckenden Verbindungsabschnitt 22.

Der Kugelaufnahmeabschnitt 21 umfasst ein abschnittsweise kugelförmiges Gehäuse mit einer Mündung, durch welche ein in der Rohrmuffe 30 aufgenommenes Rohr in den Kugelaufnahmeabschnitt 21 eindringt. Die Dimensionen des Kugelaufnahmeabschnitts 21 sind so bemessen, dass die zuvor beschriebene Rohrmuffe 30 gelenkig aufgenommen werden kann, und dass ein in der Rohraufnahme 32 der zuvor beschriebenen Rohrmuffe 30 aufgenommenes Rohr um 5 bis 10°, vorzugsweise 7,5° in jede beliebige Richtung gegenüber der Leitungsachse A20 geneigt bzw. geschwenkt werden kann. Dazu ist ein Mündungsbereich des Kugelaufnahmeabschnitts 21 nach außen entsprechend aufgeweitet.

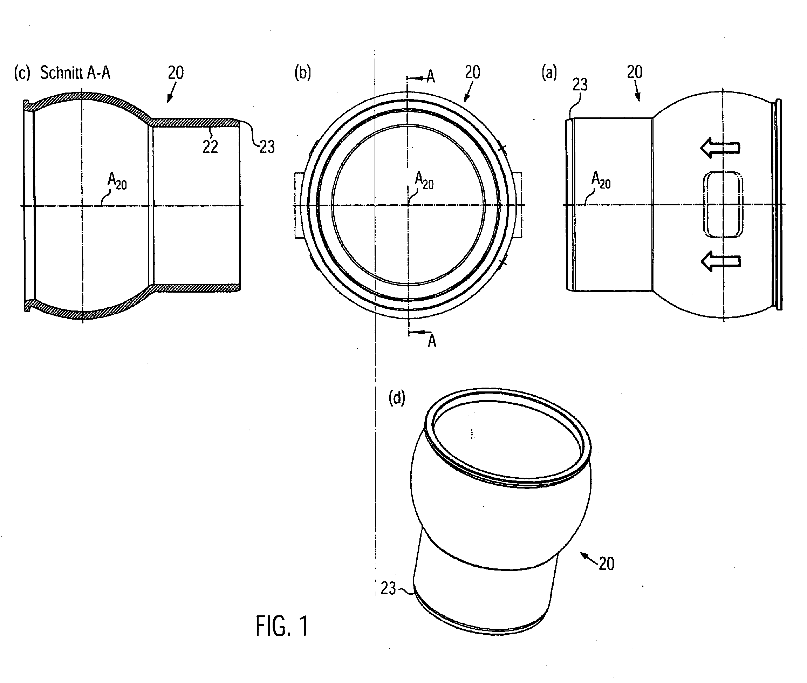

In einem ersten Ausführungsbeispiel, dass mit Bezug auf die Figuren 1a bis d beschrieben wird, ist eine Außenseite des Verbindungsabschnitts 22 zu einem freien Ende hin zugespitzt ist und bildet ein Spitzende 23. Der Außenumfang des Verbindungsabschnitts 22 entspricht im Wesentlichen dem Innenumfang der Rohraufnahme 32 der erfindungsgemäßen Rohrmuffe 30, so dass der Verbindungsabschnitt 22 mit einer Rohrmuffe 30 einer benachbarten Kugelgelenk-Kupplungen 10 verbunden werden kann.

Mehrere Kugelgelenk-Kupplungen 10 können so hintereinandergeschaltet werden, um einen größeren Winkel als 5 bis 10°, vorzugsweise 7,5°, zwischen zwei Rohren zu überbrücken.

Die bevorzugten Dimensionen der weiblichen Rohrkupplungseinrichtung 20 gemäß dem ersten Ausführungsbeispiel für einen Rohrdurchmesser von 160 mm sind:
- Durchmesser der kugelförmigen Innenkontur: ca. 196,3 mm
- Außendurchmesser des Verbindungsabschnitts 22: ca. 160,2 mm
- Axiale Länge des Kugelaufnahmeabschnitts 21: ca. 125 mm
- Axiale Länge des Verbindungsabschnitts 22: ca. 82 mm
- Wandstärke des Kugelaufnahmeabschnitts 21 und des Verbindungsabschnitts 22: ca. 5 bis 8 mm, vorzugsweise 6,6 mm

Die Maßangaben verstehen sich inklusive Allgemeintoleranzen nach DIN ISO 2768 m. Größenverhältnisse der erfindungsgemäßen Kugelgelenk-Kupplung 10 und einzelner Komponenten davon sind aus den detailgetreuen Figurendarstellungen unmittelbar ableitbar.

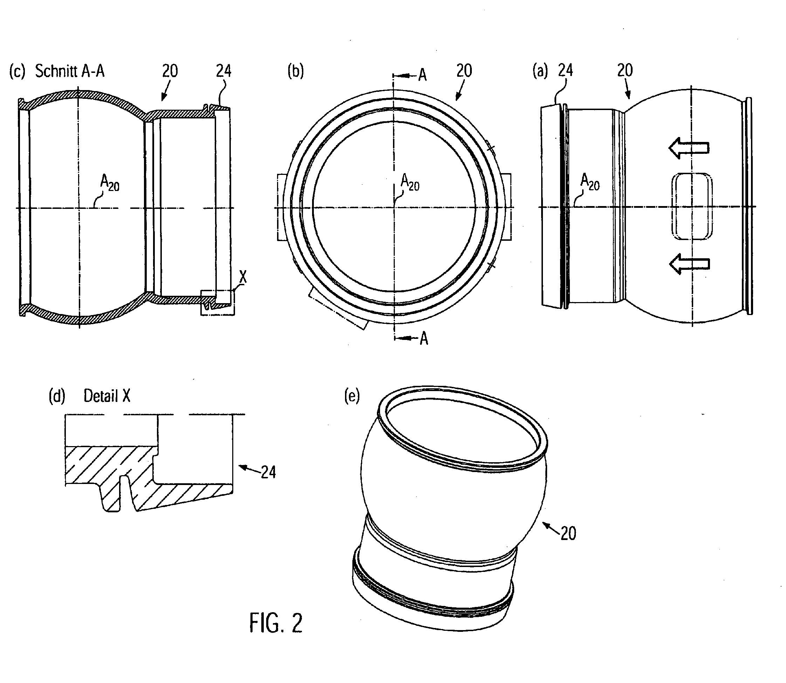

In einem zweiten Ausführungsbeispiel, das mit Bezug auf die Figuren 2a bis e beschrieben wird, weist der Verbindungsabschnitt 22 eine Rasteinrichtung 24 auf. Der Innenumfang des Verbindungsabschnitts 22 entspricht in etwa dem Innenumfang der Rohraufnahme 32 der Rohrmuffe 30, so dass der Verbindungsabschnitt 22 über ein Rohr mit konstantem Querschnitt mit der Rohrmuffe 30 einer benachbarten Kugelgelenk-Kupplung 10 gekoppelt werden kann. Die Rasteinrichtung 24 kann mit einem Rastmittel eines entsprechenden Verbindungspartners verbunden werden, um die Verbindung zu dem Verbindungspartner zu sichern.

Die bevorzugten Dimensionen der weiblichen Rohrkupplungseinrichtung 20 gemäß dem zweiten Ausführungsbeispiel für einen Rohrdurchmesser von 160 mm sind:
- Durchmesser der kugelförmigen Innenkontur: ca. 196,3 mm
- Innendurchmesser des Verbindungsabschnitts 22: ca. 160,9 mm
- Axiale Länge des Kugelaufnahmeabschnitts 21: ca. 125 mm
- Axiale Länge des Verbindungsabschnitts 22: ca. 50 mm
- Axiale Länge eines umlaufenden Überstands über den Verbindungsabschnitt 22: 14,9 mm
- Innendurchmesser des umlaufenden Überstands über den Verbindungsabschnitt 22: 174,4 mm
- Wandstärke des Kugelaufnahmeabschnitts 21 und des Verbindungsabschnitts 22: ca. 6,6 mm

Die Maßangaben verstehen sich inklusive Allgemeintoleranzen nach DIN ISO 2768 m. Größenverhältnisse der erfindungsgemäßen Kugelgelenk-Kupplung 10 und einzelner Komponenten davon sind aus den detailgetreuen Figurendarstellungen unmittelbar ableitbar.

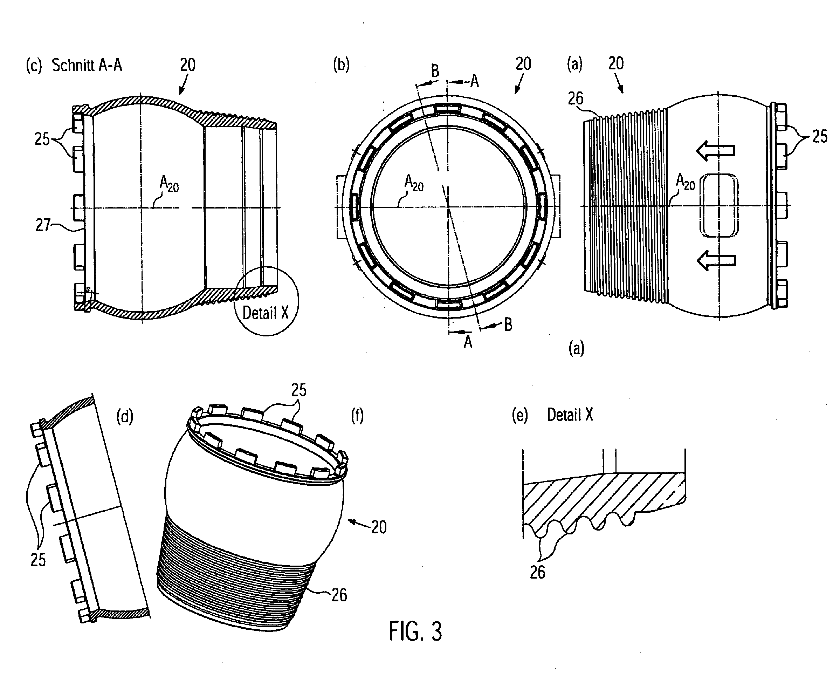

In einem dritten Ausführungsbeispiel, das mit Bezug auf die Figuren 3a bis g beschrieben wird, weist der Verbindungsabschnitt 22 ein konisches Außengewinde 26 auf. Daneben umfasst der Kugelaufnahmeabschnitt 21 an einer Mündung 27, durch welche ein Rohr der männlichen Rohrkupplungseinrichtung in die weibliche Rohrkupplungseinrichtung 20 eindringt, insgesamt zwölf Vorsprungsabschnitte 25, welche die Mündung 27 umrandend im Wesentlichen axial entlang der Leitungsachse A20 von dem Kugelaufnahmeabschnitt 21 hervorstehen und in Umfangsrichtung voneinander beabstandet sind.

Die bevorzugten Dimensionen der weiblichen Rohrkupplungseinrichtung 20 gemäß dem dritten Ausführungsbeispiel für einen Rohrdurchmesser von 160 mm sind:
- Durchmesser der kugelförmigen Innenkontur: ca. 196,3 mm
- Innendurchmesser des Verbindungsabschnitts 22: ca. 152,5 mm bzw. ca. 148,7 mm, wobei Abschnitte unterschiedlicher Innendurchmesser durch einen konischen Übergang verbunden sind und sich der Innendurchmesser des Verbindungsabschnitts 22 zum freien Ende des Verbindungsabschnitts 22 von 152,5 mm auf 148,7 mm verringert.
- Axiale Länge der weiblichen Rohrkupplungseinrichtung 20: ca. 178 mm
- Axiale Länge des Verbindungsabschnitts 22: ca. 50 mm
- Axiale Länge der über die Mündung 27 vorstehenden Vorsprungsabschnitte 25: ca. 10 mm
- Bogenlänge der Vorsprungsabschnitte 25 mit Bezug auf die Leitungsachse A20: ca. 15°
- Winkelabstand der Mittelachsen der Vorsprungsabschnitte 25: ca. 30°
- Wandstärke des Kugelaufnahmeabschnitts 21 und des Verbindungsabschnitts 22: ca. 6,6 mm

Die Maßangaben verstehen sich inklusive Allgemeintoleranzen nach DIN ISO 2768 m. Größenverhältnisse der erfindungsgemäßen Kugelgelenk-Kupplung 10 und einzelner Komponenten davon sind aus den detailgetreuen Figurendarstellungen unmittelbar ableitbar.

Die Merkmale der verschiedenen Ausführungsbeispiele können bei Bedarf kombiniert werden.

Die Komponenten der erfindungsgemäßen Kugelgelenk-Kupplung 10 sind vorzugsweise aus Kunststoff, bevorzugt Polypropylen gefertigt. Bei Bedarf können auch andere Materialien eingesetzt werden.

Die Komponenten der erfindungsgemäßen Kugelgelenk-Kupplung 10 mit den obigen beispielhaften Größenangaben sind für Kunststoffrohre mit einem Nominalaußendurchmesser von 160 mm ausgelegt. Bei anderen Rohrdurchmessern verändern sich die übrigen Größenangaben entsprechend, vorzugsweise proportional.

## Patentansprüche

1. Rohrmuffe (30) für eine Kugelgelenk-Kupplung (10), umfassend: eine abschnittsweise kugelförmige Außenkontur und eine Rohraufnahme (32), die endseitig durch einen Rohranschlag (33) begrenzt ist; wobei die Rohrmuffe (30) mit einer weiblichen Rohrkupplungseinrichtung (20) mit einer abschnittsweise kugelförmigen Innenkontur koppelbar ist, um ein in der Rohraufnahme (32) aufnehmbares Rohr gelenkig an die weibliche Rohrkupplungseinrichtung (20) zu koppeln, wobei der Rohranschlag (33) von zumindest zwei Anschlagsabschnitten (34) gebildet wird, die von einer Innenwand (35) der Rohrmuffe (30) hervorstehen, **dadurch gekennzeichnet, dass** die Innenwand (35) der Rohrmuffe (30) von welcher die Anschlagsabschnitte hervorstehen, einen Winkel von 10 bis 20°, vorzugsweise 15°, gegenüber einer Leitungsachse (A30) der Rohrmuffe (30) einschließt.

2. Rohrmuffe (30) nach Anspruch 1, **dadurch gekennzeichnet, dass** der Rohranschlag (33) von einer Vielzahl von Anschlagsabschnitten (34) gebildet wird, deren Mittelachsen im Wesentlichen denselben Winkelabstand (WA) aufweisen.

3. Rohrmuffe (30) nach einem der vorangegangenen Ansprüche, **dadurch gekennzeichnet, dass** die Anschlagsabschnitte (34) einen engsten Leitungsquerschnitt der Rohrmuffe (30) definieren.

4. Rohrmuffe (30) nach einem der vorangegangenen Ansprüche, **dadurch gekennzeichnet, dass** eine Bogenlänge (BL) der Anschlagsabschnitte (34) in etwa 20 bis 40 %, vorzugsweise ca. 33 % des Winkelabstands (WA) der Mittelachsen zweier benachbarter Anschlagsabschnitte (34) beträgt.

5. Rohrmuffe (30) nach einem der vorangegangenen Ansprüche, **dadurch gekennzeichnet, dass** ein Anschlagsabschnitt (34) eine im wesentlichen keilförmige Querschnittsform aufweist, wobei eine radial nach innen gerichtete Seite des Anschlagsabschnitts (34) einen Winkel von 0 bis 10°,vorzugsweise 5°, gegenüber der Leitungsachse (A30) einschließt.

6. Rohrmuffe (30) nach einem der vorangegangenen Ansprüche, **dadurch gekennzeichnet, dass** die Rohrmuffe (30) an einer Außenseite zumindest drei Dichtungsaufnahmekammern (36) aufweist.

7. Rohrmuffe (30) nach einem der vorangegangenen Ansprüche, **dadurch gekennzeichnet, dass** die Rohrmuffe (30) an einer Innenseite zumindest eine Dichtungsaufnahmekammer (38) aufweist.

8. Rohrmuffe (30) nach einem der vorangegangenen Ansprüche, **dadurch gekennzeichnet, dass** die Rohrmuffe (30) an einer Außenseite zumindest fünf, vorzugsweise sechs, Kugelflächenabschnitte (37) aufweist, die innerhalb einer gemeinsamen Kugelfläche (K) enden, wobei die Kugelflächenabschnitte (37) in einer Leitungsachsrichtung der Rohrmuffe (30) voneinander beabstandet sind.

9. Rohrmuffe (30) nach einem der vorangegangenen Ansprüche, **dadurch gekennzeichnet, dass** zumindest vier Kugelflächenabschnitte (37) an umlaufenden Rippen ausgebildet sind, die von einem Gehäuse (31) der Rohrmuffe (30) im Wesentlichen radial nach außen hervorstehen.

10. Rohrmuffe (30) nach einem der vorangegangenen Ansprüche 8 oder 9, **dadurch gekennzeichnet, dass** eine Dichtungsaufnahmekammer (36) zwischen zwei Kugelflächenabschnitten (37) ausgebildet ist.

11. Rohrmuffe (30) nach einem der vorangegangenen Ansprüche, **dadurch gekennzeichnet, dass** ein Innenumfang der Rohraufnahme (32) in etwa 70 bis 90 %, vorzugsweise in etwa 80 % eines Außenumfangs der kugelförmigen Außenkontur der Rohrmuffe (30) beträgt.

12. Kugelgelenk-Kupplung (10) zum Verbinden von Rohren, umfassend: eine weibliche Rohrkupplungseinrichtung (20) mit einer abschnittsweise kugelförmigen Innenkontur und eine männliche Rohrkupplungseinrichtung (30) mit einer abschnittsweise kugelförmigen Außenkontur, wobei die männlichen und weiblichen Rohrkupplungseinrichtungen (20, 30) in Fluidkommunikation stehend gelenkig gekoppelt sind, wobei die männliche Rohrkupplungseinrichtung eine Rohrmuffe (30) nach einem der vorangegangenen Ansprüche aufweist.

13. Kugelgelenk-Kupplung (10) nach Anspruch 12, **dadurch gekennzeichnet, dass** in zumindest einer Dichtungsaufnahmekammer (36) ein quellfähiges Dichtelement angeordnet ist, das unter dem Einfluss von Feuchtigkeit aufquillt und gegenüber der weiblichen Rohrkupplungseinrichtung (20) abdichtet.

14. Kugelgelenk-Kupplung (10) nach Anspruch 13, **dadurch gekennzeichnet, dass** das quellfähige Dichtelement in einer einem Mündungsende (39) nächstliegenden Dichtungsaufnahmekammer (36) auf der Außenseite der Rohrmuffe (30) angeordnet ist.

## Claims

1. Pipe sleeve (30) for a ball-and-socket-joint coupling (10), comprising: a partially spherical outer contour and a pipe holder (32), which is bounded at the end by a pipe stop (33); wherein the pipe sleeve (30) can be coupled to a female pipe-coupling device (20) with a partially spherical inner contour, in order for a pipe which can be accommodated in the pipe holder (32) to be coupled in an articulated manner to the female pipe-coupling device (20), wherein the pipe stop (33) is formed by at least two stop portions (34) which project from an inner wall (35) of the pipe sleeve (30), **characterized in that** the inner wall (35) of the pipe sleeve (30), from which the stop portions project, encloses an angle of 10 to 20°, preferably 15°, in relation to a conduit axis (A30) of the pipe sleeve (30).

2. Pipe sleeve (30) according to Claim 1, **characterized in that** the pipe stop (33) is formed by a multiplicity of stop portions (34), of which the centre axes are spaced apart by essentially the same angular distance (WA).

3. Pipe sleeve (30) according to one of the preceding claims, **characterized in that** the stop portions (34) define the narrowest conduit cross section of the pipe sleeve (30).

4. Pipe sleeve (30) according to one of the preceding claims, **characterized in that** an arc length (BL) of the stop portions (34) is approximately 20 to 40%, preferably approximately 33%, of the angular distance (WA) between the centre axes of two adjacent stop portions (34).

5. Pipe sleeve (30) according to one of the preceding claims, **characterized in that** a stop portion (34) has an essentially wedge-shaped cross section, wherein a radially inwardly directed side of the stop portion (34) encloses an angle of 0 to 10°, preferably 5°, in relation to the conduit axis (A30).

6. Pipe sleeve (30) according to one of the preceding claims, **characterized in that** the pipe sleeve (30), on an outer side, has at least three seal-accommodating chambers (36).

7. Pipe sleeve (30) according to one of the preceding claims, **characterized in that** the pipe sleeve (30), on an inner side, has at least one seal-accommodating chamber (38).

8. Pipe sleeve (30) according to one of the preceding claims, **characterized in that** the pipe sleeve (30), on an outer side, has at least five, preferably six, spherical-surface portions (37), which terminate within a common spherical surface (K), wherein the spherical-surface portions (37) are spaced apart from one another in a conduit-axis direction of the pipe sleeve (30).

9. Pipe sleeve (30) according to one of the preceding claims, **characterized in that** at least four spherical-surface portions (37) are formed on encircling ribs which project essentially radially outwards from a housing (31) of the pipe sleeve (30).

10. Pipe sleeve (30) according to either of the preceding Claims 8 and 9, **characterized in that** a seal-accommodating chamber (36) is formed between two spherical-surface portions (37).

11. Pipe sleeve (30) according to one of the preceding claims, **characterized in that** an inner circumference of the pipe holder (32) is approximately 70 to 90%, preferably approximately 80%, of an outer circumference of the spherical outer contour of the pipe sleeve (30).

12. Ball-and-socket-joint coupling (10) for connecting pipes, comprising: a female pipe-coupling device (20) with a partially spherical inner contour and a male pipe-coupling device (30) with a partially spherical outer contour, wherein the male and female pipe-coupling devices (20, 30) are coupled in an articulated manner for fluid communication, wherein the male pipe-coupling device has a pipe sleeve (30) according to one of the preceding claims.

13. Ball-and-socket-joint coupling (10) according to Claim 12, **characterized by** the arrangement, in at least one seal-accommodating chamber (36), of a swellable sealing element, which swells up, and provides sealing in relation to the female pipe-coupling device (20), under the influence of moisture.

14. Ball-and-socket-joint coupling (10) according to Claim 13, **characterized in that** the swellable sealing element is arranged in a seal-accommodating chamber (36) which is located on the outside of the pipe sleeve (30), next to a mouth-opening end (39).

## Revendications

1. Manchon de tuyau (30) pour un raccord à rotule (10), comportant : un contour extérieur partiellement sphérique et un logement de tuyau (32) qui est limité à une extrémité par une butée de tuyau (33) ; le manchon de tuyau (30) pouvant être raccordé à un dispositif de raccordement de tuyau femelle (20) présentant un contour intérieur partiellement sphérique, afin de raccorder de manière articulée un tuyau pouvant être reçu dans le logement de tuyau (32) au dispositif de raccordement de tuyau femelle (20), la butée de tuyau (33) étant formée par au moins deux portions de butée (34) qui font saillie à partir d'une paroi intérieure (35) du manchon de tuyau (30), **caractérisé en ce que** la paroi intérieure (35) du manchon de tuyau (30), à partir de laquelle les portions de butée font saillie, forme un angle de 10 à 20°, de préférence de 15°, par rapport à un axe de conduite (A30) du manchon de tuyau (30).

2. Manchon de tuyau (30) selon la revendication 1, **caractérisé en ce que** la butée de tuyau (33) est formée par une pluralité de portions de butée (34) dont les axes médians présentent essentiellement le même écart angulaire (WA).

3. Manchon de tuyau (30) selon l'une quelconque des revendications précédentes, **caractérisé en ce que** les portions de butée (34) définissent la section transversale de conduite la plus étroite du manchon de tuyau (30).

4. Manchon de tuyau (30) selon l'une quelconque des revendications précédentes, **caractérisé en ce qu'**une longueur d'arc (BL) des portions de butée (34) vaut approximativement 20 à 40 %, de préférence environ 33 %, de l'écart angulaire (WA) des axes médians de deux portions de butée adjacentes (34).

5. Manchon de tuyau (30) selon l'une quelconque des revendications précédentes, **caractérisé en ce qu'**une portion de butée (34) présente une forme en section transversale essentiellement cunéiforme, un côté, orienté radialement vers l'intérieur, de la portion de butée (34) formant un angle de 0 à 10°, de préférence de 5°, par rapport à l'axe de conduite (A30).

6. Manchon de tuyau (30) selon l'une quelconque des revendications précédentes, **caractérisé en ce que** le manchon de tuyau (30) comprend au moins trois chambres de réception de joint d'étanchéité (36) sur un côté extérieur.

7. Manchon de tuyau (30) selon l'une quelconque des revendications précédentes, **caractérisé en ce que** le manchon de tuyau (30) comprend au moins une chambre de réception de joint d'étanchéité (38) sur un côté intérieur.

8. Manchon de tuyau (30) selon l'une quelconque des revendications précédentes, **caractérisé en ce que** le manchon de tuyau (30) comprend au moins cinq, de préférence six, portions de surface sphérique (37) sur un côté extérieur, lesquelles se terminent à l'intérieur d'une surface sphérique commune (K), les portions de surface sphérique (37) étant espacées les unes des autres dans une direction d'axe de conduite du manchon de tuyau (30).

9. Manchon de tuyau (30) selon l'une quelconque des revendications précédentes, **caractérisé en ce qu'**au moins quatre portions de surface sphérique (37) sont réalisées sur des nervures périphériques qui font saillie essentiellement radialement vers l'extérieur à partir d'un boîtier (31) du manchon de tuyau (30).

10. Manchon de tuyau (10) selon l'une quelconque des revendications précédentes 8 et 9, **caractérisé en ce qu'**une chambre de réception de joint d'étanchéité (36) est réalisée entre deux portions de surface sphérique (37).

11. Manchon de tuyau (30) selon l'une quelconque des revendications précédentes, **caractérisé en ce qu'**une circonférence intérieure du logement de tuyau (32) vaut approximativement 70 à 90 %, de préférence approximativement 80 %, d'une circonférence extérieure du contour extérieur sphérique du manchon de tuyau (30).

12. Raccord à rotule (10) pour le raccordement de tuyaux, comportant : un dispositif de raccordement de tuyau femelle (20) présentant un contour intérieur partiellement sphérique et un dispositif de raccordement de tuyau mâle (30) présentant un contour extérieur partiellement sphérique, les dispositifs de raccordement de tuyau mâle et femelle (20, 30) étant raccordés de manière articulée en communication fluidique, le dispositif de raccordement de tuyau mâle comprenant un manchon de tuyau (30) selon l'une quelconque des revendications précédentes.

13. Raccord à rotule (10) selon la revendication 12, **caractérisé en ce qu'**un élément d'étanchéité apte à gonfler est disposé dans au moins une chambre de réception de joint d'étanchéité (36), lequel gonfle sous l'influence de l'humidité et réalise l'étanchéité vis-à-vis du dispositif de raccordement de tuyau femelle (20).

14. Raccord à rotule (10) selon la revendication 13, **caractérisé en ce que** l'élément d'étanchéité apte à gonfler est disposé dans une chambre de réception de joint d'étanchéité (36) la plus proche d'une extrémité d'embouchure (39) sur le côté extérieur du manchon de tuyau (30).
